# EUROPÄISCHE PATENTSCHRIFT

(11) **EP 3 124 781 B1**
(45) Veröffentlichungstag und Bekanntmachung des Hinweises auf die Patenterteilung: **20.12.2017**
(21) Anmeldenummer: 15178884.1
(22) Anmeldetag: 29.07.2015
(51) Int. Cl.: F02M 25/12, F02B 43/10, F02D 19/06, F02D 19/08

(54) **SCHIFFSANTRIEBSSYSTEM UND VERFAHREN ZUM BETRIEB EINES SCHIFFSANTRIEBSSYSTEMS**
MARINE PROPULSION SYSTEM AND METHOD FOR OPERATING A MARINE PROPULSION SYSTEM
MOTORISATION MARINE ET PROCEDE DE FONCTIONNEMENT D'UN SYSTEME DE MOTORISATION MARINE

(43) Veröffentlichungstag der Anmeldung: 01.02.2017
(73) Patentinhaber: Fuelsave GmbH, 69190 Walldorf (DE)
(72) Erfinder: HOFFMANN, Dirk, 21244 Buchholz i.d.N. (DE)
(74) Vertreter: Ridderbusch, Oliver

(56) Entgegenhaltungen:
- EP-A1- 2 602 358
- WO-A1-2007/085094
- WO-A2-2008/033107
- KR-A- 20110 119 055
- US-A1- 2006 179 819
- US-A1- 2012 067 304

## Beschreibung

Die vorliegende Erfindung bezieht sich auf einen Schiffsantriebssystem nach dem Oberbegriff des Anspruchs 1. Außerdem betrifft die Erfindung ein Verfahren zum Betrieb eines Schiffsantriebssystems nach dem Oberbegriff des Anspruchs 9.

Schiffsantriebssysteme, die Gegenstand der vorliegenden Offenbarung sind, können allein oder in Ergänzung zu einem weiteren Antriebssystem ein grundsätzlich beliebiges Schiff antreiben. Solch ein Schiffsantriebssystem kann beispielsweise ein Dieselhilfsmotor sein, welcher ergänzend zu einem Antriebsystem vorhanden ist, welches zum Antreiben des Schiffes Schweröl verbrennt.

Ein gattungsgemäßes Schiffsantriebssystem umfasst mindestens einen Verbrennungsmotor zum Antreiben eines Schiffs, wobei der Verbrennungsmotor eine Verbrennungskammer zum Verbrennen eines fossilen Energieträgers, insbesondere eines Dieselkraftstoffs, aufweist.

Bei einem gattungsgemäßen Verfahren zum Betrieb eines Schiffsantriebssystems ist vorgesehen, dass mit mindestens einem Verbrennungsmotor ein Schiff angetrieben wird, wozu ein fossiler Energieträger, beispielsweise ein Dieselkraftstoff, in eine Verbrennungskammer des Verbrennungsmotors eingeleitet wird.

Ausgehend von bekannten Schiffsantriebssystemen besteht insbesondere aufgrund zunehmend strengerer Schadstoffemissionsvorschriften ein Bestreben, den Verbrennungsprozess des Verbrennungsmotors so zu gestalten, dass möglichst wenige Schadstoffe entstehen. Gleichzeitig sollte die Effizienz oder der Wirkungsgrad des Verbrennungsmotors möglichst hoch sein.

KR 2011 0119055 A, US 2012/0067304 A1, EP 2 602 358 A1, US 2006/0179819 A1 und WO 2008/033107 A2 beschreiben Verbrennungsmotoren, bei denen Wasserstoff- und Sauerstoffgas zur Schadstoffminderung im Abgas verwendet werden. Das Wasserstoff- und Sauerstoffgas werden, beispielsweise bei US 2012/0067304 A1 und US 2006/0179819 A1, mit einer Elektrolyseeinrichtung hergestellt.

Als eine **Aufgabe** der Erfindung kann angesehen werden, ein Schiffsantriebssystem und ein Verfahren zum Betrieb eines Schiffsantriebssystem anzugeben, bei welchen ein Verbrennungsmotor mit möglichst hoher Effizienz arbeitet und möglichst geringe Schadstoffmengen im Abgas ausgibt.

Diese Aufgabe wird durch das Schiffsantriebssystem mit den Merkmalen des Anspruchs 1 und durch das Verfahren zum Betrieb eines Schiffsantriebssystems mit den Merkmalen des Anspruchs 9 gelöst. Vorteilhafte Varianten des erfindungsgemäßen Schiffsantriebssystems und des erfindungsgemäßen Verfahrens sind Gegenstand der abhängigen Ansprüche und werden außerdem in der folgenden Beschreibung erläutert.

Bei dem Schiffsantriebssystem der oben genannten Art sind erfindungsgemäß eine Elektrolysekammer zum Erzeugen von Wasserstoffgas und Sauerstoffgas sowie eine Unterdruckpumpe zum Absaugen des Wasserstoffgases und des Sauerstoffgases aus der Elektrolysekammer vorhanden. Zudem ist ein Vergasungstank vorhanden, in welchem flüchtige organische Verbindungen, insbesondere Methanol oder Ethanol, vorhanden sind und dort vergast werden, also zumindest teilweise von flüssiger Form in Gasform übergehen. Zudem ist eine Versorgungsleitung zum Zuführen eines Gasgemisches zur Verbrennungskammer vorhanden, wobei das Gasgemisch vergaste organische Verbindungen (das heißt einen in Gasform übergegangenen Teil der flüchtigen organischen Verbindungen aus dem Vergasungstank) sowie zumindest einen Teil des in der Elektrolysekammer erzeugten Wasserstoffgases und Sauerstoffgases umfasst. Die Versorgungsleitung und der Vergasungstank sind also so angeordnet, dass im Betrieb des Schiffsantriebssystems ein Gasgemisch, wie oben definiert, zur Verbrennungskammer geleitet wird.

Das Verfahren der oben genannten Art ist erfindungsgemäß dadurch weitergebildet, dass in einer Elektrolysekammer Wasserstoffgas und Sauerstoffgas erzeugt werden, dass mit einer Unterdruckpumpe das Wasserstoffgas und das Sauerstoffgas aus der Elektrolysekammer abgesaugt werden, dass in einem Vergasungstank flüchtige organische Verbindungen, insbesondere Methanol oder Ethanol, vergast werden und dass ein Gasgemisch, welches vergaste organische Verbindungen sowie zumindest einen Teil des in der Elektrolysekammer erzeugten Wasserstoffgases und Sauerstoffgases umfasst, in die Verbrennungskammer geleitet wird.

Als ein wesentlicher Gedanke der Erfindung werden Wasserstoffgas und Sauerstoffgas, welche durch Elektrolyse erzeugt werden, nur zusammen mit gasförmigen flüchtigen organischen Verbindungen, also insbesondere zusammen mit in Gasform überführtes Methanol und/oder Ethanol, in die Verbrennungskammer geleitet. Ein solches Gasgemisch kann eine NOₓ-Erzeugung reduzieren und eine besonders schnelle Verbrennung von Diesel in der Verbrennungskammer bewirken. Durch eine schnellere Verbrennung kann ein höherer Druck zu einem bestimmten Zeitpunkt erzeugt werden, womit schlussendlich eine effizientere Kraftübertragung möglich ist.

Das Gasgemisch wird stets zusätzlich zu einem fossilen Energieträger in die Verbrennungskammer gegeben und dort verbrannt. Der wesentliche freigesetzte Energieanteil, beispielsweise mindestens 70% oder mindestens 90%, stammt dabei vom fossilen Energieträger, beispielsweise ein Dieselkraftstoff. Das zusätzliche Gasgemisch dient demnach nicht als Ersatzenergiequelle, sondern hilft, einen gewünschten Verbrennungsablauf des fossilen Energieträgers zu bewirken. Dadurch kann erreicht werden, weniger Schadstoffe zu erzeugen, und zudem kann der Verbrennungsprozess schneller erfolgen, wodurch eine effizientere Kraftweiterleitung möglich ist.

Die genannten flüchtigen organischen Verbindungen können prinzipiell eine bestimmte organische Verbindung oder ein Gemisch verschiedener organischer Verbindungen sein. Unter "flüchtigen" organischen Verbindungen können alle organischen Verbindungen angesehen werden, welche bei Raumtemperatur überwiegend gasförmig sind und/oder einen Siedebereich unter 100°C oder unter 200°C oder 300°C aufweisen. Organische Verbindungen können insbesondere Kohlenwasserstoffe sein und/oder alle Verbindungen, die überwiegend aus Wasserstoff- und Kohlenstoffatomen bestehen. Beispiele von solchen organischen Verbindungen sind Alkanole (wie Methanol und Ethanol) oder Alkane (wie Methan oder Ethan).

Unter dem Vergasungstank kann prinzipiell ein beliebiger Behälter verstanden werden, in welchem flüchtige organische Verbindungen aufgenommen sind. Diese können dort zumindest teilweise von flüssiger Form in Gasform übergehen. Vorzugsweise sind die Unterdruckpumpe und der Vergasungstank so angeordnet, dass das Wasserstoffgas und das Sauerstoffgas zumindest teilweise mittels der Unterdruckpumpe von der Elektrolysekammer in den Vergasungstank befördert werden. Das Gasgemisch wird dann folglich im Vergasungstank erzeugt. Die Versorgungsleitung kann daher beim Vergasungstank beginnen und von dort das Gasgemisch in Richtung der Verbrennungskammer befördern.

Zweckmäßigerweise kann der Vergasungstank daher einen Einlass umfassen, welcher mit der Elektrolysekammer verbunden ist, einen Auslass, aus welchem in Gasform übergegangene organische Verbindungen sowie durchgeleitetes Wasserstoffund Sauerstoffgas ausgegeben werden, sowie eine Befüllungsöffnung zum Nachfüllen von als Flüssigkeit vorliegende organische Verbindungen, beispielsweise Ethanol.

Es kann bevorzugt sein, Wasserstoffgas und Sauerstoffgas in den Vergasungstank vorzugsweise über mehrere Düsen einzuleiten, welche sich in einem unteren Teil des Vergasungstanks befinden. Als unterer Teil kann insbesondere die untere Hälfte oder das untere Viertel des Vergasungstanks angesehen werden. Durch diese Einleitung im unteren Teil kommt es vorteilhafterweise zu einer stärkeren Vergasung. Indem mehrere Düsen genutzt werden, können die eingeleiteten Gase gleichmäßiger verteilt den Vergasungstank durchströmen, was ebenfalls für eine stärkere Vergasung vorteilhaft ist.

Die Versorgungsleitung selbst kann zwar direkt bis zur Verbrennungskammer laufen. Grundsätzlich genügt es aber, wenn die Versorgungsleitung mit einer Leitungseinrichtung verbunden ist, welche das Gasgemisch zur Verbrennungskammer leiten kann. Es ist bevorzugt, wenn die Versorgungsleitung mit einer Luftansaugkomponente des Verbrennungsmotors verbunden ist.

So ist bei der Erfindung ein Turbolader vorhanden und die Versorgungsleitung ist so gestaltet, dass das Gasgemisch über einen Verdichter des Turboladers zur Verbrennungskammer leitbar ist. Als Vorteil können hierdurch die Verbrennungskammer und direkt daran angrenzende Komponenten des erfindungsgemäßen Schiffsantriebssystems gleich gestaltet sein wie bei herkömmlichen Schiffsantriebssystemen. Zudem ermöglicht diese Ausgestaltung der Erfindung eine besonders wirkungsvolle Steuerung der Menge an Gasgemisch, die in die Verbrennungskammer geleitet wird. Dies wird später näher beschrieben.

Unter der Elektrolysekammer kann allgemein eine beliebige Vorrichtung verstanden werden, welche unter Nutzung von elektrischer Energie Wasserstoffgas und Sauerstoffgas erzeugt, also insbesondere H₂ und O₂. Als Ausgangsstoff der Elektrolyse kann Wasser oder eine wasserhaltige Mischung verwendet werden. Es kann vorteilhaft sein, wenn die Elektrolysekammer und ein Leitungssystem von der Elektrolysekammer zum Vergasungstank so gebildet sind, dass erzeugtes Wasserstoffgas und Sauerstoffgas ungetrennt als Knallgas beförderbar sind. Hierdurch ist bei vergleichsweise einfacher Konstruktion eine zeitlich exakte Zündung in der Verbrennungskammer durch Einleiten dieses Knallgases möglich.

Die Unterdruckpumpe kann eine Pumpe prinzipiell beliebiger Bauart sein. Sie erzeugt einen Unterdruck, durch welchen Wasserstoffgas und Sauerstoffgas aus der Elektrolysekammer abgesaugt werden. Die Unterdruckpumpe kann auch aus mehreren Pumpeinheiten bestehen. Dies ist insbesondere vorteilhaft, wenn erzeugtes Wasserstoffgas und Sauerstoffgas getrennt, also nicht als Knallgas, abgesaugt werden.

Außer einem Weiterleiten von Wasserstoffgas und Sauerstoffgas aus der Elektrolysekammer kann die Unterdruckpumpe auch den Wirkungsgrad der Elektrolysekammer erhöhen. So ist es für eine Elektrolyse wünschenswert, dass Elektroden der Elektrolysekammer von flüssigem Elektrolyt umgeben sind. Blasenbildungen, also Gase wie zum Beispiel erzeugtes Wasserstoff- und Sauerstoffgas, hindern die Elektrolyse und machen höhere Temperaturen erforderlich. Dies kann bei einer bevorzugten Ausführungsform der Erfindung verhindert werden, indem in der Elektrolysekammer durch die Unterdruckpumpe ein Unterdruck erzeugt wird, insbesondere ein Druck unter 1 bar, insbesondere zwischen 200 mbar und 700 mbar, insbesondere zwischen 300 mbar und 600 mbar oder zwischen 340 mbar und 580 mbar. Durch solch einen verhältnismäßig niedrigen Druck kann die Elektrolysekammer bei einer Temperatur von unter 40°C, insbesondere bei 38 bis 39°C betrieben werden, womit ein Wirkungsgrad der Elektrolyse erhöht wird.

Die Unterdruckpumpe kann so betrieben werden, dass sie aus der Elektrolysekammer so viel Gas (insbesondere entstehendes Wasserstoff- und Sauerstoffgas) absaugt, dass im Betrieb der Elektrolysekammer höchstens ein Viertel der Elektrolysekammer, bevorzugt höchstens 10 Prozent der Elektrolysekammer, mit Gas gefüllt ist.

Der Verbrennungsmotor des Schiffsantriebssystems kann ein in prinzipiell bekannter Weise gebildeter Motor sein, welcher durch Verbrennung eines (insbesondere fossilen) Energieträgers Wärmeenergie und damit Bewegungsenergie zum Antreiben des Schiffs erzeugt. Ein Beispiel eines fossilen Energieträgers ist Diesel, das heißt ein Dieselkraftstoff, wobei die genaue Zusammensetzung des Dieselkraftstoffes in im Wesentlichen bekannter Weise variabel sein kann.

Das Schiffsantriebssystem kann auch einen Abgasfilter zum Reinigen von Abgasen umfassen, beispielsweise einen Rußpartikelfilter. Für eine möglichst hohe Lebensdauer eines Abgasfilters und eine effiziente Wirkung ist die Reinigung des Abgasfilters wichtig. Dies kann mit Sauerstoffgas erreicht werden. Wird dieses dem Abgas vorm Abgasfilter zugefügt, kann es am Filter als Radikal wirken und so bei der Säuberung des Filters dienen. Dies wird bei einer bevorzugten Ausführungsform der Erfindung umgesetzt. Hier kann ein Trennmittel, etwa ein Diaphragma, vorhanden sein, zum Trennen von dem Wasserstoffgas und dem Sauerstoffgas, welche in der Elektrolysekammer erzeugbar sind. Zudem ist eine Leitung zum Leiten eines Anteils des Sauerstoffgases zum Abgasfilter vorhanden, wobei das von der Versorgungsleitung zur Verbrennungskammer geleitete Gasgemisch das übrige Sauerstoffgas (also den Anteil des Sauerstoffgases, welcher nicht zum Abgasfilter geleitet wird) und das Wasserstoffgas sowie die vergasten organischen Verbindungen umfassen kann.

Die Trennung des erzeugten Sauerstoffgases und Wasserstoffgases kann hierbei an prinzipiell beliebiger Stelle erfolgen. Es ist auch möglich, dass Sauerstoffgas und Wasserstoffgas von der Elektrolysekammer ungetrennt zur Verbrennungskammer geleitet werden, während ein Anteil dieses Knallgasgemisches (das heißt des Gemisches mit Sauerstoffgas und Wasserstoffgas) in eine separate Leitung abgezweigt und erst dort mit dem Trennmittel in Sauerstoffgas und getrennt hiervon vorliegendes Wasserstoffgas getrennt wird.

Zweckmäßigerweise wird die Elektrolysekammer mit einem elektrischen Strom versorgt, durch welchen in der Elektrolysekammer das Wasserstoffgas und das Sauerstoffgas gewonnen werden. Zudem wird Wasser eingeleitet, aus welchem das Wasserstoffgas und das Sauerstoffgas erzeugt werden. Vorzugsweise sind Steuermittel vorhanden und dazu eingerichtet, den elektrischen Strom und/oder eine Wassereinleitung in die Elektrolysekammer und/oder eine Pumpleistung der Unterdruckpumpe abhängig von einer momentanen Eigenschaft eines Verbrennungsmotorbetriebs zu steuern. Die Steuerung kann insbesondere so erfolgen, dass die Menge an eingeleitetem Gasgemisch umso größer ist, je größer die Menge des fossilen Energieträgers ist, die in die Verbrennungskammer eingeleitet wird. Das erzeugte Gasgemisch dient demnach nicht als Ersatz für einen fossilen Brennträger / Energieträger. Vielmehr wird das Gasgemisch als Zusatz genutzt, welcher den Verbrennungsvorgang in wünschenswerter Weise beeinflusst. Die Steuermittel können den Strom und die Pumpleistung insbesondere so einstellen, dass ein Verhältnis von eingespritztem Diesel zu dem eingeleiteten Gasgemisch im Wesentlichen konstant ist, also im Wesentlichen unabhängig ist von einer Einspritzrate und einer eingespritzten Dieselmenge. Unter "im Wesentlichen konstant" können Schwankungen bis höchstens 10%, vorzugsweise höchstens 5%, des vorgenannten Verhältnisses angesehen werden.

Bei einer bevorzugten Ausgestaltung sind die Steuermittel dazu eingerichtet, als momentane Eigenschaft des Verbrennungsmotorbetriebs, in Abhängigkeit von welcher der elektrische Strom und/oder die Pumpleistung gesteuert werden, einen Ladedruck des Verbrennungsmotors zu nutzen. Dabei bezeichnet der Ladedruck einen Luftdruck in einer Ansaugleitung des Verbrennungsmotors. Die Steuermittel können nun dazu eingerichtet sein, den elektrischen Strom und die Pumpleistung umso größer einzustellen, je höher der Ladedruck ist. Anstelle des Ladedrucks kann prinzipiell auch ein anderer hiervon abhängiger Druck für die Steuerung verwendet werden, beispielsweise ein Abgasdruck, insbesondere vor dem Turbolader. Um den Ladedruck und/oder einen anderen für die Steuerung genutzten Druck zu erfassen, können zweckmäßigerweise entsprechende Druckmessmittel vorhanden sein. Auch kann anstelle eines Drucks eine mit der Motorenleistung verbundene Größe für die Steuerung genutzt werden, beispielsweise eine Motordrehzahl. Unter Umständen kann es jedoch bei Nutzung solcher elektrischer Signale leichter zu Fehlern kommen als bei einer Steuerung über den (Lade-)Druck.

Weiterhin ist eine Luftpumpe zum Pumpen von Luft in den Vergasungstank vorhanden. Bei der Luft kann es sich um Umgebungsluft, insbesondere um ein Gemisch beliebiger Gase, handeln. Je mehr Luft in den Vergasungstank gepumpt wird, desto größer ist die Menge vergaster organischer Verbindungen. Dadurch wird die Menge des erzeugten Gasgemisches erhöht. Dies ist wünschenswert, wenn im Verbrennungsmotor mit besonders großer Rate ein fossiler Brennstoff verbrannt wird und demgemäß eine besonders große Menge an erzeugtem Gasgemisch zugeleitet werden sollte.

Um bei einer größeren eingeleiteten Menge des fossilen Energieträgers auch eine größere Menge an erzeugtem Gasgemisch zuzuführen, ist es bevorzugt, dass die Unterdruckpumpe mit steigender Pumpleistung betrieben wird, wenn der Ladedruck steigt. Es kann vorgesehen sein, dass die Unterdruckpumpe mit maximaler Pumpleistung betrieben wird, wenn der Ladedruck einen vorgegebenen Ladedruckwert erreicht. Steigt nun der Ladedruck über diesen vorgegebenen Ladedruckwert, wäre es wünschenswert, eine noch größere Menge an Gasgemisch zuzuführen. Die Menge an Sauerstoffgas und Wasserstoffgas ist zwar durch die Unterdruckpumpe und die Elektrolysekammer beschränkt, eine größere Menge vergaster organischer Verbindungen kann aber mit Hilfe der Luftpumpe zugeführt werden. Daher kann vorgesehen sein, dass zusätzlich die Luftpumpe betrieben wird, wenn der Ladedruck über den vorgegebenen Ladedruckwert steigt. Insbesondere kann eine Leistung der Luftpumpe umso höher eingestellt werden, je weiter der Ladedruck über den vorgegebenen Ladedruckwert steigt. Hierbei wird stets die Unterdruckpumpe mit maximaler Pumpleistung betrieben. Durch die Luftpumpe ändert sich zwar die Zusammensetzung des Gasgemisches, dies ist aber gleichwohl besser als eine unzureichend große Menge an verfügbarem Gasgemisch. Bei dieser Steuerung kann anstelle des Ladedrucks auch ein anderer Druck verwendet werden, welcher vom Ladedruck abhängt (beispielsweise ein Abgasdruck). Zudem kann anstelle des Ladedrucks auch eine andere Größe verwendet werden, die mit steigender Motorenleistung steigt, beispielsweise die Motordrehzahl.

Es kann bevorzugt sein, dass ein Vorratstank vorhanden und mit dem Vergasungstank verbunden ist. Der Vorratstank enthält organische Verbindungen und dient dem Befüllen des Vergasungstanks. Damit ein im Vergasungstank erzeugtes Gasgemisch ein gewünschtes Verhältnis zwischen Knallgas und organischen Verbindungen hat, ist es zweckmäßig, den Vergasungstank nicht zu groß zu wählen. Damit dennoch eine große Menge organischer Verbindungen mitgeführt werden kann, kann ein Volumen des Vorratstanks mindestens 3mal, vorzugsweise mindestens 5mal so groß sein wie ein Volumen des Vergasungstanks.

Vorteilhafterweise kann durch das Einleiten des Gasgemisches eine Zündung eines eingeleiteten fossilen Energieträgers in der Verbrennungskammer bewirkt werden. Durch das Gasgemisch, welches Knallgas umfasst, kann die Verbrennung schneller erfolgen. Es kann bevorzugt sein, dass ein Zündzeitpunkt bei einem Kurbelwellenwinkel von kleiner 20°, insbesondere zwischen 17° und 19°, insbesondere zwischen 17,5° und 18,5° vor dem oberen Totpunkt (eines Kolbens des Verbrennungsmotors) bewirkt wird. Dieser Zündzeitpunkt kann durch den Zeitpunkt des Einleitens des Gasgemisches in die Verbrennungskammer vorgegeben und gesteuert werden. Bei dieser Ausführung erfolgt somit der Zündzeitpunkt knapper vor dem oberen Totpunkt als üblicherweise. Ein solcher späterer Zündzeitpunkt kann gewählt werden, da die Verbrennung bei der Erfindung besonders schnell abläuft. Zu einem gewünschten Zeitpunkt kann so ein höherer Druck erzeugt werden.

Die Erfindung betrifft weiterhin ein Schiff mit einem wie hierin beschrieben gebildeten Sch iffsantriebssystem.

Durch den bestimmungsgemäßen Gebrauch der beschriebenen Ausführungsformen des Schiffsantriebsystems ergeben sich Varianten des erfindungsgemäßen Verfahrens. Zudem sind bevorzugte Ausführungsformen des erfindungsgemäßen Schiffsantriebsystems, insbesondere dessen Steuermittel, eingerichtet zum Ausführen der beschriebenen Varianten des erfindungsgemäßen Verfahrens.

Weitere Vorteile und Merkmale der Erfindung werden nachstehend mit Bezug auf die beigefügten schematischen Figuren beschrieben. Hierbei zeigen:
- Fig. 1: eine schematische Darstellung eines Ausführungsbeispiels eines erfindungsgemäßen Schiffsantriebsystems und
- Fig. 2: eine schematische Darstellung eines weiteren Ausführungsbeispiels eines erfindungsgemäßen Schiffsantriebsystems.

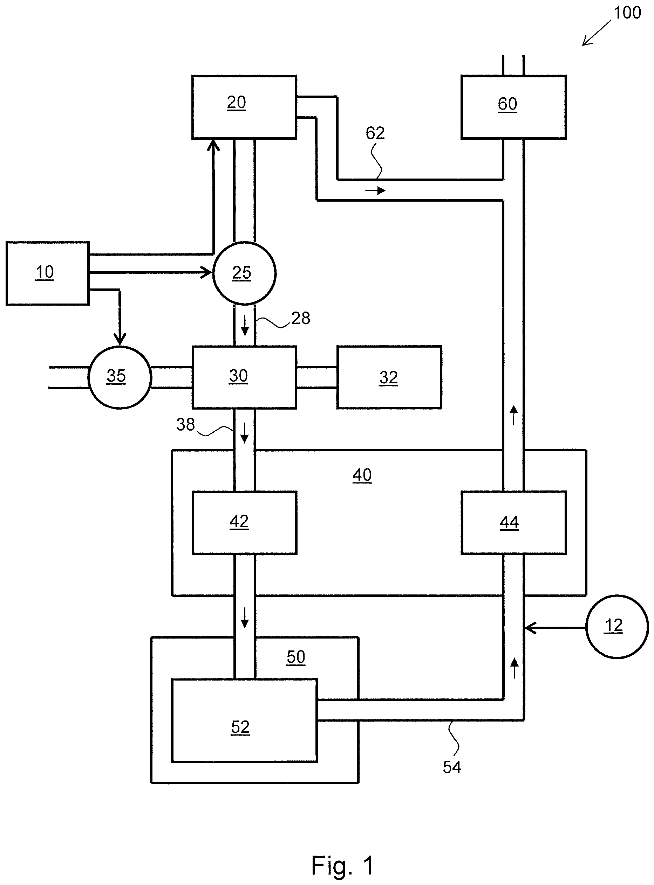

Fig. 1 zeigt schematisch ein Ausführungsbeispiel eines erfindungsgemäßen Schiffsantriebsystems 100. Dieses kann Bestandteil eines hier nicht dargestellten erfindungsgemäßen Schiffs sein. Außer dem Schiffsantriebssystem 100 kann das Schiff auch ein weiteres Antriebssystem umfassen, beispielsweise einen Verbrennungsmotor für Schweröl. Zudem kann das Schiff über mehrere Schiffsantriebssysteme 100 verfügen, die jeweils wie nachstehend beschrieben gebildet sein können.

Als wesentliche Komponenten umfasst das Schiffsantriebsystem 100 eine Elektrolysekammer 20 zum Erzeugen von Wasserstoffgas und Sauerstoffgas, einen Vergasungstank 30 zum Vergasen von flüchtigen organischen Verbindungen sowie einen Verbrennungsmotor 50, dem außer einem fossilen Brennträger auch das erzeugte Wasserstoffgas, das Sauerstoffgas und die gasförmigen organischen Verbindungen zugeführt werden.

Durch die Zugabe dieses Gasgemisches kann die Verbrennung von Diesel oder auch einem anderen fossilen Brennstoff schneller erfolgen und es entstehen weniger Schadstoffe, die im Abgas ausgegeben werden.

Zunächst wird in der Elektrolysekammer 20 Wasser oder ein anderer Ausgangsstoff mit Hilfe von elektrischer Energie in Wasserstoffgas, Sauerstoffgas und eventuell weitere Bestandteile umgewandelt.

Über ein Leitungssystem 28 werden das erzeugte Wasserstoffgas und das erzeugte Sauerstoffgas befördert. Diese beiden Gase können insbesondere als Gemisch, das heißt als Knallgas, vorliegen. Zur Weiterleitung ist im Leitungssystem 28 eine Unterdruckpumpe 25 vorhanden. Diese erzeugt in der Elektrolysekammer 20 einen Unterdruck, wodurch das Sauerstoffgas und das Wasserstoffgas abgesaugt werden.

Außerdem bewirkt der Unterdruck in der Elektrolysekammer 20, dass geringere Mengen an Elektrolyt, welches in der Elektrolysekammer 20 vorhanden ist, von der flüssigen Phase in Gasform übergehen. Dadurch kann der Wirkungsgrad der Elektrolysekammer 20 erhöht werden.

Das Leitungssystem 28 führt das Sauerstoffgas und das Wasserstoffgas zu dem Vergasungstank 30. In diesem befinden sich organische Verbindungen, beispielsweise Methanol und/oder Ethanol, welche durch die Einleitung des Wasserstoffgases und des Sauerstoffgases eine Oberflächenvergasung erfahren. Hierfür werden das Wasserstoffgas und das Sauerstoffgas in einem unteren Teil, insbesondere am Boden, des Vergasungstanks 30 in diesen eingeleitet. In dem Vergasungstank 30 wird so ein Gasgemisch erzeugt, welches zumindest Wasserstoffgas, Sauerstoffgas und vergaste organische Verbindungen, insbesondere Methanol und/oder Ethanol, umfasst. Dieses Gasgemisch wird sodann über eine Versorgungsleitung 38 weitergleitet. Alternativ kann aber auch vorgesehen sein, dass das Knallgas nicht durch den Vergasungstank 30 geleitet wird und stattdessen aus dem Vergasungstank gasförmige organische Verbindungen abgeleitet und erst dann mit dem Knallgas zusammengeführt werden.

Die Größe des Vergasungstanks 30 kann so gewählt sein, dass beim Durchleiten von Wasserstoffgas und Sauerstoffgas eine gewünschte Menge an organischen Verbindungen in Gasform übergeht und als Gemisch mit dem Wasserstoff- und Sauerstoffgas vorliegt. Damit ein Schiff, welches das erfindungsgemäße Schiffsantriebssystem umfasst, größere Mengen als durch den Vergasungstank vorgegeben mitführen kann, kann ein Vorratstank 32 vorhanden sein. Dieser versorgt den Vergasungstank 30 mit organischen Verbindungen und wird nicht selbst von erzeugtem Wasserstoff- und Sauerstoffgas durchströmt. Es kann ein Füllstandssensor am Vergasungstank 30 vorgesehen sein, über welchen eine Einleitung von organischen Verbindungen aus dem Vorratstank 32 in den Vergasungstank 30 gesteuert wird.

Die Versorgungsleitung 38 führt das erzeugte Gasgemisch vom Vergasungstank 30 zu einem Verdichter 42 eines Turboladers 40. Hierbei kann das Gasgemisch zusammen mit Umgebungsluft zu dem Verdichter 42 geführt werden. Für diese Zusammenführung kann eine entsprechende Leitung vorhanden sein (nicht dargestellt). Von dem Turbolader 40 gelangt das Gasgemisch in eine Verbrennungskammer 52 des Verbrennungsmotors 50. In der Verbrennungskammer 52 entzündet sich das Gasgemisch und bewirkt eine Verbrennung von ebenfalls eingeleitetem fossilem Brennstoff, beispielsweise von eingespritztem Dieselkraftstoff.

Abgase werden von der Verbrennungskammer 52 über eine Abgasleitung 54 zu einer Abgasturbine 44 des Turboladers 40 geführt. Ein Druck des Abgases wird daher von der Abgasturbine 44 genutzt, um mit dem Verdichter 42 das Gasgemisch in Richtung des Verbrennungsmotors 50 zu befördern. Hinter der Abgasturbine 44 gelangt das Abgas zu einem fakultativ vorhandenen Abgasfilter 60.

Eine Zufuhr des Gasgemisches in die Verbrennungskammer 52 soll umso größer sein, je größer die Menge an eingeleitetem fossilem Brenn-/Kraftstoff ist. Hierfür wird unter anderem der Turbolader 40 genutzt. Der Verdichter 42 des Turboladers 40 wird durch die Abgasturbine 44 angetrieben. Diese treibt den Verdichter 42 umso stärker an, je höher ein Abgasdruck an der Abgasturbine 44 ist. Werden nur geringe Kraftstoffmengen in der Verbrennungskammer 52 verbrannt, so ist folglich der Druck an der Abgasturbine 44 gering und der Verdichter 42 erzeugt auch nur eine geringe Ansaugung in der Versorgungsleitung 38. Werden hingegen größere Mengen an Diesel in der Verbrennungskammer 52 verbrannt, wird der Verdichter 42 eine stärkere Ansaugung des Gasgemisches aus der Versorgungsleitung 38 bewirken.

Darüber hinaus kann die Menge an erzeugtem Gasgemisch bedarfsgerecht gesteuert werden. Hierzu sind Steuermittel 10 vorhanden, welche insbesondere einen elektrischen Strom durch die Elektrolysekammer 20 einstellen können und somit die Menge an erzeugtem Wasserstoffgas und Sauerstoffgas vorgeben können. Zudem können die Steuermittel 10 die Unterdruckpumpe 25 steuern und somit einstellen, wieviel Wasserstoffgas und Sauerstoffgas aus der Elektrolysekammer 20 in den Vergasungstank 30 befördert wird. Um die Menge an erzeugtem Gasgemisch zu vergrößern, kann ein größerer elektrischer Strom und eine höhere Pumpleistung der Unterdruckpumpe 25 eingestellt werden. Die Menge an erzeugtem Gasgemisch kann umso größer eingestellt werden, je höher die Rate oder Menge an eingespritztem Diesel in die Verbrennungskammer 52 ist. Als Maß hierfür kann der Ladedruck des Verbrennungsmotors 50 genutzt werden. So können die Steuermittel 10 dazu eingerichtet sein, mit steigendem Ladedruck die Pumpleistung der Unterdruckpumpe 25 und den elektrischen Strom in der Elektrolysekammer 20 zu erhöhen. Entsprechende Druckmessmittel können vorhanden sein. Im dargestellten Beispiel sind Druckmessmittel 12 vorgesehen, welche einen Abgasdruck vor dem Turbolader 40 messen. Auch dieser Abgasdruck kann zur Steuerung der erzeugten Menge an Gasgemisch genutzt werden.

Es kann wünschenswert sein, noch größere Mengen an Gasgemisch dem Turbolader 40 beziehungsweise dem Verbrennungsmotor 50 zuzuführen, als bei einem maximalen Strom durch die Elektrolysekammer 20 und maximaler Pumpleistung der Unterdruckpumpe 25 möglich ist. Insbesondere für einen solchen Fall ist zusätzlich eine Luftpumpe 35 vorhanden. Diese pumpt Luft, insbesondere Umgebungsluft, in den Vergasungstank 30 und bewirkt so eine verstärkte Vergasung der organischen Verbindungen. Es kann vorteilhaft sein, wenn eine Leitung von der Luftpumpe 35 und das Leitungssystem 28 an der Unterdruckpumpe 25 in eine gemeinsame Leitung münden, so dass Luft von der Luftpumpe 35 und das durch Elektrolyse gewonnene Wasserstoffgas und Sauerstoffgas über dieselben Düsen in den Vergasungstank 30 eingeleitet werden. Bei anderen Ausführungen kann es aber auch vorteilhaft sein, wenn die Luft von der Luftpumpe 35 und das erzeugte Wasserstoffgas und Sauerstoffgas über getrennte Leitungen in den Vergasungstank 30 gelangen.

Eine Pumpleistung der Luftpumpe 35 wird ebenfalls über die Steuermittel 10 eingestellt. Es kann vorgesehen sein, dass die Luftpumpe 35 erst dann betrieben wird, wenn die Elektrolysekammer 20 mit maximalem Strom versorgt wird und die Unterdruckpumpe 25 mit maximaler Pumpleistung arbeitet.

Es kann auch vorteilhaft sein, wenn allein über die Luftpumpe 35, nicht aber durch die Unterdruckpumpe 25, Gas in den Vergasungstank 30 leitbar ist. Dadurch kann die dem Verbrennungsmotor 50 zugeführte Menge an organischen Verbindungen unabhängig von der dem Verbrennungsmotor 50 zugeführten Menge an Knallgas eingestellt werden.

Um den Abgasfilter 60 besonders effektiv zu reinigen, kann er mit Sauerstoffgas von der Elektrolysekammer 20 versorgt werden. Bei der dargestellten Ausführungsform ist hierfür eine Leitung 62 vorhanden, welche von der Elektrolysekammer 20 zum Abgasfilter 60 führt. Je nach Ausführungsbeispiel kann eine Gestaltung der Elektrolysekammer 20 bevorzugt sein, bei welcher entweder Sauerstoffgas vom Wasserstoffgas getrennt und ohne dieses über die Leitung 62 befördert wird, oder bei welcher Sauerstoffgas und Wasserstoffgas gemeinsam über die Leitung 62 befördert werden.

Indem das erzeugte Gasgemisch dem fossilen Energieträger in der Verbrennungskammer 52 zugeführt wird, kann eine besonders schnelle Verbrennung erfolgen. Hierdurch kann die Zündung besonders kurz vor einem oberen Totpunkt eines Kolbens des Verbrennungsmotors 50 erfolgen, womit ein höherer Wirkungsgrad möglich ist. Zudem sinkt die Menge an erzeugten Schadstoffen im Abgas.

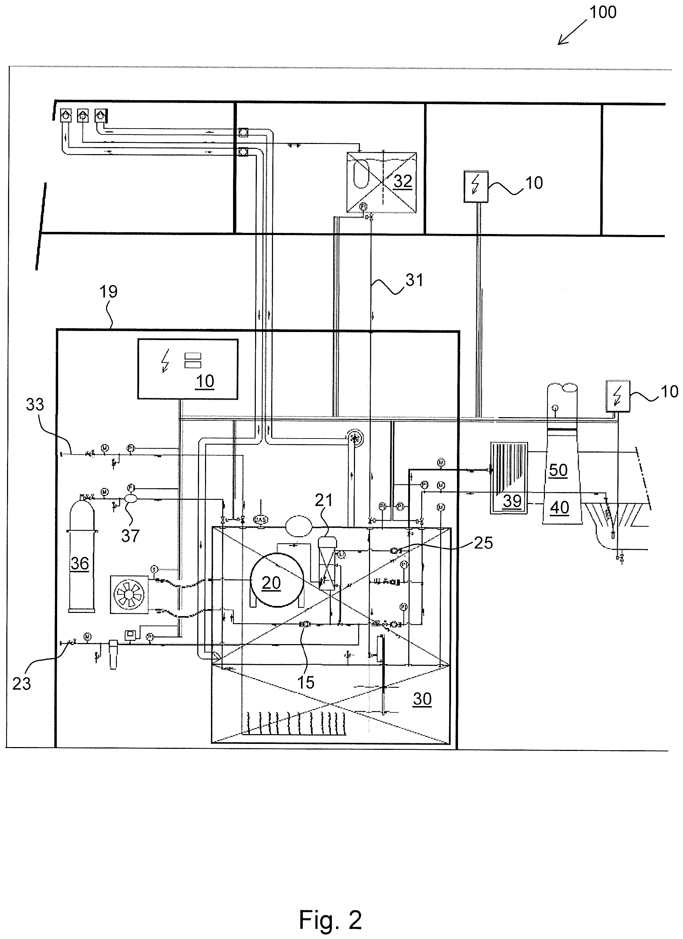

Ein weiteres Ausführungsbeispiel eines erfindungsgemäßen Schiffsantriebssystems 100 ist schematisch in Fig. 2 dargestellt. Komponenten mit den gleichen Bezugszeichen wie bei Fig. 1 können gleich gebildet sein und gleich wirken wie zu Fig. 1 beschrieben, und umgekehrt.
Als wesentliche Komponenten umfasst das Schiffsantriebssystem 100 wiederum eine Elektrolyseeinheit 20, einen Vergasungstank 30 sowie einen Turbolader 40 und einen Verbrennungsmotor 50.
Wie zu Fig. 1 erläutert, wird durch die Elektrolysekammer 20 Wasserstoff- und Sauerstoffgas erzeugt. Zusammen mit gasförmig vorliegenden flüchtigen Kohlenwasserstoffen aus dem Vergasungstank 30 werden das Wasserstoff- und das Sauerstoffgas über den Turbolader 40 zum Verbrennungsmotor 50 geleitet.
Dargestellt ist weiterhin ein Vorratstank 32, welcher einen Vorrat an flüchtigen Kohlenwasserstoffen enthält, insbesondere einen Vorrat an Ethanol oder allgemein anderen flüchtigen organischen Verbindungen. Über eine Leitung 31 können diese steuerbar in den Vergasungstank 30 geleitet werden.
Weiterhin ist eine Luftzufuhr 33 zum Zuführen von komprimierter Luft in den Vergasungstank 30 dargestellt. Diese Luftzufuhr 33 ist wichtig, um größere Mengen an gasförmig vorliegenden flüchtigen Kohlenwasserstoffen im Vergasungstank 30 zu erzeugen, um größere Mengen an flüchtigen Kohlenwasserstoffen dem Turbolader 40 und dem Verbrennungsmotor 50 zuführen zu können. Die Kompression der Luft erfolgt über die hier nicht dargestellte Luftpumpe. Während über die Luftzufuhr 33 komprimierte Umgebungsluft, also ein Gemisch aus im Wesentlichen Stickstoff und Sauerstoff, in den Vergasungstank 30 einleitbar ist, kann auch ein CO₂-Tank 36 vorhanden sein, über welchen mittels eines Ventils 37 steuerbar CO₂ in den Vergasungstank 30 eingeleitet werden kann.
Die Elektrolysekammer 20 ist mit einer Kondensatfalle 21 oder einem Kondensatsammler 21 verbunden. In diesem kann eine Trennung zwischen einem Elektrolyt und dem erzeugten Wasserstoff-/Sauerstoffgemisch erfolgen. So kondensiert in der Kondensatfalle 21 das Elektrolyt und kann sodann über eine ElektrolytZirkulationspumpe 15 zurück in die Elektrolysekammer 20 gepumpt werden. Vorteilhafterweise wird somit durch die Kondensatfalle 21 der Verbrennungsmotor 50 vor einem Flüssigkeitseintritt geschützt. Gasförmig vorliegendes Wasserstoff- und Sauerstoffgas wird hingegen aus der Kondensatfalle 21 durch die Unterdruckpumpe 25 abgesaugt.
Das von der Unterdruckpumpe 25 beförderte Knallgas (also das erzeugte Wasserstoff- und Sauerstoffgas) wird zusammen mit Kohlenwasserstoffen oder anderen organischen Verbindungen aus dem Vergasungstank 30 über eine Leitung zu einem Diaphragma 39 des Turboladers 40 geleitet.
Über einen Wassereinlass 23 kann Wasser in die Elektrolysekammer 20 geleitet werden, wo es in Wasserstoffgas und Sauerstoffgas umgewandelt wird. Für die Beförderung des Wassers vom Wassereinlass 23 zur Elektrolysekammer 20 kann ebenfalls die Elektrolytzirkulationspumpe 15 verwendet werden, womit ein vereinfachter und kosteneffizienter Aufbau ermöglicht wird. Wie dargestellt, können hierzu eine Leitung des Wassers vom Wassereinlass 23 und eine Elektrolytleitung von der Kondensatfalle 21 in einer gemeinsamen Leitung münden, welche zur Elektrolytzirkulationspumpe 15 führt.
Zweckmäßigerweise ist die Elektrolysekammer 20, welche das leicht entzündliche Knallgas erzeugt, in einem explosionsgeschützten Bereich 19 angeordnet. Dieser explosionsgeschützte Bereich 19 kann insbesondere durch ein luftdichtes Gehäuse gebildet sein und/oder kann galvanisch getrennte Übertragungsmittel für elektrische Signale umfassen. In diesem explosionsgeschützten Bereich 19 können außer der Elektrolysekammer 20 auch der Vergasungstank 30, die Kondensatfalle 21 und die Unterdruckpumpe 25 angeordnet sein. Um die Größe des explosionsgeschützten Bereiches 19 nicht übermäßig groß gestalten zu müssen, ist hingegen der Vorratstank 32 vorzugsweise außerhalb des explosionsgeschützten Bereiches 19 angeordnet. Der Turbolader 40 und dessen Diaphragma 39 sind zweckmäßigerweise ebenfalls außerhalb des explosionsgeschützten Bereiches 19 angeordnet.
Durch das erfindungsgemäße Schiffsantriebssystem wird ermöglicht, einen Verbrennungsmotor durch die Zugabe von Knallgas und zusätzlichen flüchtigen organischen Verbindungen besonders effizient zu betreiben. Zudem wird die Schadstoffentstehung hierbei verringert.

## Patentansprüche

1. Schiffsantriebssystem mit
- einem Verbrennungsmotor (50) zum Antreiben eines Schiffs,
wobei der Verbrennungsmotor (50) eine Verbrennungskammer (52) zum Verbrennen eines fossilen Energieträgers, insbesondere eines Dieselkraftstoffs, aufweist,
- einer Elektrolysekammer (20) zum Erzeugen von Wasserstoffgas und Sauerstoffgas,
- einem Turbolader (40),
- einer Versorgungsleitung (38), welche so gestaltet ist, dass ein Gasgemisch über einen Verdichter (42) des Turboladers (40) zur Verbrennungskammer (52) leitbar ist, wobei das Gasgemisch zumindest einen Teil des Wasserstoffgases und des Sauerstoffgases umfasst, und
- einer Unterdruckpumpe (25) zum Absaugen des Wasserstoffgases und des Sauerstoffgases aus der Elektrolysekammer (20),
**dadurch gekennzeichnet, dass** ein Vergasungstank (30) mit darin aufgenommenen flüchtigen organischen Verbindungen, insbesondere Methanol oder Ethanol, vorgesehen ist,
dass zusätzlich zum Turbolader (40) eine Luftpumpe (35) zum Pumpen von Luft in den Vergasungstank (30) vorhanden ist,
dass das Gasgemisch, welches über die Versorgungsleitung (38) zur Verbrennungskammer (52) geführt wird, auch vergaste organische Verbindungen aus dem Vergasungstank (30) umfasst.

2. Schiffsantriebssystem nach Anspruch 1,
**dadurch gekennzeichnet,**
**dass** die Unterdruckpumpe (25) und der Vergasungstank (30) so angeordnet sind, dass das Wasserstoffgas und das Sauerstoffgas zumindest teilweise durch die Unterdruckpumpe (25) von der Elektrolysekammer (20) in den Vergasungstank (30) beförderbar sind zum Erzeugen des Gasgemisches.

3. Schiffsantriebssystem nach Anspruch 1 oder 2,
**dadurch gekennzeichnet,**
**dass** die Elektrolysekammer (20) und ein Leitungssystem von der Elektrolysekammer (20) zum Vergasungstank (30) so gebildet sind, dass Wasserstoffgas und Sauerstoffgas ungetrennt als Knallgas beförderbar sind.

4. Schiffsantriebssystem nach einem der Ansprüche 2 oder 3,
**dadurch gekennzeichnet,**
**dass** das in den Vergasungstank (30) geleitete Wasserstoffgas und Sauerstoffgas über mehrere Düsen in einem unteren Teil des Vergasungstanks (30) eingeleitet werden.

5. Schiffsantriebssystem nach einem der Ansprüche 1 bis 4,
**dadurch gekennzeichnet,**
**dass** ein Vorratstank (32) vorgesehen und mit dem Vergasungstank (30) verbunden ist zum Befüllen des Vergasungstanks (30) mit organischen Verbindungen.

6. Schiffsantriebssystem nach einem der Ansprüche 1 bis 5,
**dadurch gekennzeichnet,**
**dass** die Elektrolysekammer (20) mit einem elektrischen Strom versorgt wird, durch welchen in der Elektrolysekammer (20) das Wasserstoffgas und das Sauerstoffgas gewonnen werden, und
**dass** Steuermittel (10) vorhanden und dazu eingerichtet sind, den elektrischen Strom und/oder eine Wassereinleitung in die Elektrolysekammer (20) und/oder eine Pumpleistung der Unterdruckpumpe (25) abhängig von einer momentanen Eigenschaft eines Verbrennungsmotorbetriebs zu steuern.

7. Schiffsantriebssystem nach Anspruch 6,
**dadurch gekennzeichnet,**
**dass** die Steuermittel (10) dazu eingerichtet sind, als momentane Eigenschaft des Verbrennungsmotorbetriebs, in Abhängigkeit von welcher der elektrische Strom, die Wassereinleitung und/oder die Pumpleistung der Unterdruckpumpe (25) gesteuert werden, einen Ladedruck des Verbrennungsmotors (50) zu nutzen, und
**dass** die Steuermittel (10) dazu eingerichtet sind, den elektrischen Strom und die Pumpleistung umso größer einzustellen, je höher der Ladedruck ist.

8. Schiff
mit einem Schiffsantriebssystem nach einem der Ansprüche 1 bis 7.

9. Verfahren zum Betrieb eines Schiffsantriebssystems,
bei dem mit einem Verbrennungsmotor (50) ein Schiff angetrieben wird und hierzu ein fossiler Energieträger in eine Verbrennungskammer (52) des Verbrennungsmotors (50) eingeleitet wird,
bei dem in einer Elektrolysekammer (20) Wasserstoffgas und Sauerstoffgas erzeugt werden,
bei dem ein Gasgemisch über einen Verdichter (42) eines Turboladers (40) zur Verbrennungskammer (52) geleitet wird, wobei das Gasgemisch zumindest einen Teil des Wasserstoffgases und des Sauerstoffgases umfasst, bei dem mit einer Unterdruckpumpe (25) das Wasserstoffgas und das Sauerstoffgas aus der Elektrolysekammer (20) abgesaugt werden, **dadurch gekennzeichnet,**
**dass** in einem Vergasungstank (30) flüchtige organische Verbindungen, insbesondere Methanol oder Ethanol, vergast werden,
**dass** mit einer Luftpumpe (35), welche zusätzlich zum Turbolader (40) vorgesehen ist, Luft in den Vergasungstank (30) gepumpt wird,
**dass** das Gasgemisch, welches zur Verbrennungskammer (52) geführt wird, auch vergaste organische Verbindungen aus dem Vergasungstank (30) umfasst.

10. Verfahren nach Anspruch 9,
**dadurch gekennzeichnet,**
**dass** in der Elektrolysekammer (20) durch die Unterdruckpumpe (25) ein Unterdruck erzeugt wird, insbesondere ein Druck unter 1 bar, insbesondere zwischen 200 mbar und 700 mbar, insbesondere zwischen 300 mbar und 600 mbar.

11. Verfahren nach Anspruch 9 oder 10,
**dadurch gekennzeichnet,**
**dass** die Unterdruckpumpe (25) aus der Elektrolysekammer (20) so viel Gas absaugt, dass im Betrieb der Elektrolysekammer (20) höchstens ein Viertel der Elektrolysekammer (20) mit Gas gefüllt ist.

12. Verfahren nach einem der Ansprüche 9 bis 11,
**dadurch gekennzeichnet,**
**dass** ein Zündzeitpunkt bei einem Kurbelwellenwinkel von kleiner 20°, insbesondere zwischen 17° und 19°, insbesondere zwischen 17,5° und 18,5°, vor einem oberen Totpunkt bewirkt wird.

13. Verfahren nach einem der Ansprüche 9 bis 12,
**dadurch gekennzeichnet,**
**dass** die Unterdruckpumpe (25) mit maximaler Pumpleistung betrieben wird, wenn eine Kenngröße für eine Motorleistung, insbesondere ein Ladedruck des Verbrennungsmotors (50), einen vorgegebenen Schwellwert erreicht, und
**dass** zusätzlich die Luftpumpe (35) betrieben wird, welche Luft in den Vergasungstank (30) hinein pumpt, wenn die Kenngröße über den vorgegebenen Schwellwert steigt.

## Claims

1. Ship propulsion system, comprising
- an internal combustion engine (50) for propelling a ship,
- wherein the internal combustion engine (50) has a combustion chamber (52) for burning a fossil fuel, in particular a diesel fuel,
- an electrolysis chamber (20) for producing hydrogen gas and oxygen gas,
- a turbocharger (40),
- a supply line (38), which is designed so that a gas mixture can be conveyed via a compressor (42) of the turbocharger (40) to the combustion chamber (52), the gas mixture including at least a part of the hydrogen gas and the oxygen gas, and
- a vacuum pump (25) for drawing off the hydrogen gas and the oxygen gas from the electrolysis chamber (20),
**characterised in that**
a gasification tank (30) with volatile organic compounds received therein, in particular methanol or ethanol, is provided,
in addition to the turbocharger (40) there is an air compressor (35) for pumping air into the gasification tank (30),
the gas mixture, which is guided via the supply line (38) to the combustion chamber (52), also includes gasified organic compounds from the gasification tank (30).

2. Ship propulsion system according to claim 1,
**characterised in that**
the vacuum pump (25) and the gasification tank (30) are arranged so that the hydrogen gas and the oxygen gas can be conveyed at least partially through the vacuum pump (25) from the electrolysis chamber (20) into the gasification tank (30) to produce the gas mixture.

3. Ship propulsion system according to claim 1 or 2,
**characterised in that**
the electrolysis chamber (20) and a pipeline system are formed from
the electrolysis chamber (20) to the gasification tank (30) so that hydrogen gas and oxygen gas can be conveyed, unseparated, as oxyhydrogen.

4. Ship propulsion system according to one of claims 2 or 3,
**characterised in that**
the hydrogen gas and oxygen gas conveyed into the gasification tank (30) are introduced via a plurality of nozzles in a lower part of the gasification tank (30).

5. Ship propulsion system according to one of claims 1 to 4,
characterised that
a storage tank (32) is provided and connected to the gasification tank (30) for filling the gasification tank (30) with organic compounds.

6. Ship propulsion system according to one of claims 1 to 5,
**characterised in that**
the electrolysis chamber (20) is supplied with an electric current, through which the hydrogen gas and the oxygen gas are obtained in the electrolysis chamber (20), and
there are control means (10), which are configured to control the electric current and / or an introduction of water into the electrolysis chamber (20) and / or a pumping capacity of the vacuum pump (25) in dependence on a momentary property of an internal combustion engine operation.

7. Ship propulsion system according to claim 6,
**characterised in that**
the control means (10) are configured to use, as a momentary property of the internal combustion engine operation in dependence on which the electric current, the water introduction and / or the pumping capacity of the vacuum pump (25) are controlled, a boost pressure of the internal combustion engine (50), and
the control means (10) are configured to set the electric current and the pumping capacity to be higher, the higher the boost pressure is.

8. Ship,
comprising a ship propulsion system according to one of claims 1 to 7.

9. Method for operating a ship propulsion system,
wherein a ship is propelled with an internal combustion engine (50) and, for this, a fossil fuel is introduced into a combustion chamber (52) of the internal combustion engine (50),
wherein, in an electrolysis chamber (20), hydrogen gas and oxygen gas are produced,
wherein a gas mixture is conveyed via a compressor (42) of a turbocharger (40) to the combustion chamber (52), the gas mixture including at least a part of the hydrogen gas and the oxygen gas,
wherein, with a vacuum pump (25), the hydrogen gas and the oxygen gas are drawn off from the electrolysis chamber (20),
**characterised in that**
in a gasification tank (30), volatile organic compounds, in particular methanol or ethanol, are gasified,
with an air compressor (35), which is provided in addition to the turbocharger (40), air is pumped into the gasification tank (30),
the gas mixture, which is guided to the combustion chamber (52), also includes gasified organic compounds from the gasification tank (30).

10. Method according to claim 9,
**characterised in that**
in the electrolysis chamber (20), a reduced pressure is generated by the vacuum pump (25), in particular a pressure below 1 bar, in particular between 200 mbar and 700 mbar, in particular between 300 mbar and 600 mbar.

11. Method according to claim 9 or 10,
**characterised in that**
the vacuum pump (25) draws off so much gas from the electrolysis chamber (20) that, during operation of the electrolysis chamber (20), at most a quarter of the electrolysis chamber (20) is filled with gas.

12. Method according to one of claims 9 to 11,
**characterised in that**
an ignition timing is effected at a crankshaft angle of less than 20°, in particular between 17° and 19°, in particular between 17.5° and 18.5°, before top dead centre.

13. Method according to one of claims 9 to 12,
**characterised in that**
the vacuum pump (25) is operated with maximum pumping capacity when a parameter for an engine operation, in particular a boost pressure of the internal combustion engine (50), reaches a predefined threshold value, and
in addition the air compressor (35) is operated, which pumps air into the gasification tank (30), when the parameter exceeds the predefined threshold value.

## Revendications

1. Système de propulsion pour navires avec
- un moteur à combustion (50) pour propulser un navire,
tandis qu'un moteur à combustion (50) présente une chambre à combustion (52) pour la combustion d'énergie fossile, en particulier d'un carburant diesel,
- une chambre à électrolyse (20) pour produire de l'hydrogène gazeux et de l'oxygène gazeux,
- un turbocompresseur (40),
- un conduit d'approvisionnement (38), qui est conçu de telle sorte qu'un mélange gazeux peut être conduit par le biais d'un compresseur (42) du turbocompresseur (40) vers la chambre de combustion (52), tandis que le mélange gazeux entoure au moins une partie de l'hydrogène gazeux et de l'oxygène gazeux, et
- une pompe à vide (25) pour aspirer l'hydrogène gazeux et l'oxygène gazeux de la chambre à électrolyse (20),
**caractérisé en ce que**
une cuve de gazéification (30) avec, à l'intérieur, des composés organiques volatils, en particulier du méthanol ou de l'éthanol, est prévue, en plus du turbocompresseur (40), une pompe à air (35) est disponible pour pomper de l'air dans la cuve de gazéification (30),
le mélange gazeux, qui est conduit par le biais de la conduite d'approvisionnement (38) vers la chambre à combustion (52), comprend également des composés organiques gazéifiés provenant de la cuve de gazéification (30).

2. Système de propulsion pour navires selon la revendication 1,
**caractérisé en ce que**
la pompe à vide (25) et la cuve de gazéification (30) sont agencés de telle sorte que l'hydrogène gazeux et l'oxygène gazeux sont au moins en partie transportables par le biais de la pompe à vide (25) de la chambre à électrolyse (20) vers la cuve de gazéification pour la production du mélange gazeux.

3. Système de propulsion pour navires selon la revendication 1 ou 2,
**caractérisé en ce que**
la chambre à électrolyse (20) et un système de conduite de la chambre à électrolyse (20) vers la cuve de gazéification (30) sont formés de telle sorte que l'hydrogène gazeux et l'oxygène gazeux sont transportables, sans être séparés, en tant que gaz explosifs.

4. Système de propulsion pour navires selon une des revendications 2 ou 3,
**caractérisé en ce que**
l'hydrogène gazeux et l'oxygène gazeux conduits dans la cuve de gazéification (30) sont introduits, par le biais de plusieurs buses, dans une partie inférieure de la cuve de gazéification (30).

5. Système de propulsion pour navires selon une des revendications 1 à 4,
**caractérisé en ce que**
une cuve de réserve (32) est prévue et est reliée à la cuve de gazéification (30) pour le remplissage de la cuve de gazéification (30) avec des composés organiques.

6. Système de propulsion selon une des revendications 1 à 5,
**caractérisé en ce que**
la chambre à électrolyse (20) est approvisionnée en courant électrique par le biais duquel l'hydrogène gazeux et l'oxygène gazeux peuvent être obtenus dans la chambre à électrolyse (20), et
des moyens de commande (10) sont disponibles et configurés pour conduire le courant électrique et/ou une conduite d'eau dans la chambre à électrolyse (20) et/ou commander une puissance de pompage de la pompe à vide (25) en fonction d'une propriété momentanée d'un fonctionnement du moteur à combustion.

7. Système de propulsion pour navires selon la revendication 6,
**caractérisé en ce que**
les moyens de commande (10) sont agencés pour utiliser, en tant que propriété momentanée du fonctionnement du moteur à combustion, en fonction de laquelle le courant électrique, l'ouverture d'entrée d'eau et/ou de la puissance de pompage de la pompe à vide (25) sont commandés, une pression d'alimentation du moteur à combustion (50), et
les moyens de commande (10) sont agencés pour augmenter le courant électrique et la puissance de pompage en fonction de l'augmentation de la pression d'alimentation.

8. Navire
avec un système de propulsion pour navires selon une des revendications 1 à 7.

9. Procédure pour le fonctionnement d'un système de propulsion pour navires, pour laquelle un navire est propulsé avec un moteur à combustion (50) et, pour cela, de l'énergie fossile est introduite dans une chambre à combustion (52) du moteur à combustion (50),
pour lequel de l'hydrogène gazeux et de l'oxygène gazeux sont produits dans une chambre à électrolyse (20),
pour lequel un mélange gazeux est conduit par le biais d'un compresseur (42) d'un turbocompresseur (40) jusqu'à la chambre à combustion (52), tandis que le mélange gazeux entoure au moins une partie de l'hydrogène gazeux et de l'oxygène gazeux,
l'hydrogène gazeux et l'oxygène gazeux sont aspirés avec une pompe à vide (25) de la chambre à électrolyse (20),
**caractérisée en ce que**
des composés organiques volatils, en particulier du méthanol ou de l'éthanol, sont gazéifiés dans une cuve de gazéification (30),
de l'air est pompé dans la cuve de gazéification (30) avec une pompe à air (35), laquelle est prévue en plus du turbocompresseur (40),
le mélange gazeux, qui est conduit vers la chambre à combustion (52), comprend également des composés organiques gazéifiés provenant de la cuve de gazéification (30).

10. Procédure selon la revendication 9
**caractérisée en ce que**
une dépression est générée dans la chambre à électrolyse (20) par le biais d'une pompe à vide (25), en particulier une pression inférieure à 1 bar, en particulier entre 200 mbar et 700 mbar, en particulier entre 300 mbar et 600 mbar.

11. Procédure selon la revendication 9 ou 10
**caractérisée en ce que**
la pompe à vide (25) aspire tellement de gaz de la chambre à électrolyse (20) que, lors du fonctionnement de la chambre à électrolyse (20), maximum un quart de la chambre à électrolyse (20) est remplie de gaz.

12. Procédure selon une des revendications 9 à 11,
**caractérisée en ce que**
un moment d'allumage est provoqué, pour un angle de vilebrequin inférieur à 20°, en particulier entre 17° et 19°, en particulier entre 17,5° et 18,5°, avant un point mort haut.

13. Procédure selon une des revendications 9 à 12,
**caractérisée en ce que**
la pompe à vide (25) est mise en fonctionnement avec une puissance de pompage maximale, lorsqu'une grandeur caractéristique pour une puissance de moteur, en particulier une pression d'alimentation du moteur à combustion (50) atteint une valeur seuil prédéterminée, et
en plus, la pompe à air (35) est mise en fonctionnement, laquelle pompe de l'air dans la cuve de gazéification (30), lorsque la grandeur caractéristique dépasse la valeur seuil prédéterminée.
